# EUROPEAN PATENT SPECIFICATION

(11) **EP 3 663 201 B1**
(45) Date of publication and mention of the grant of the patent: **19.04.2023**
(21) Application number: 19213461.7
(22) Date of filing: 04.12.2019
(51) Int. Cl.: B64D 11/00, B64D 11/04, B64D 45/00, C09D 5/26, G01K 11/12

(54) **THERMOCHROMIC PAINT FOR TEMPERATURE-RELATED WARNINGS**
THERMOCHROME FARBE FÜR TEMPERATURBEDINGTE WARNUNGEN
PEINTURE THERMOCHROMIQUE POUR LES AVERTISSEMENTS LIÉS À LA TEMPÉRATURE

(30) Priority: 05.12.2018 US 201816210892
(43) Date of publication of application: 10.06.2020
(73) Proprietor: Rockwell Collins, Inc., Cedar Rapids, IA 52498 (US)
(72) Inventor: HUIJSING, Hans, 3404 KD IJsselstein (NL)
(74) Representative: Dehns

(56) References cited:
- EP-A2- 2 669 647
- CN-A- 102 029 248
- JP-A- S6 465 047
- US-A- 4 554 565
- US-A1- 2004 004 069
- US-A1- 2016 332 730
- US-B1- 7 028 634

## Description

### TECHNICAL FIELD

The present invention generally relates to thermochromic substances, and, more particularly, to the use of thermochromic paint for temperature-related warnings.

### BACKGROUND

In order to prevent injuries and/or damage to property, many products are manufactured to include various messages and/or warnings advising users of potentially harmful or dangerous properties of the products. For example, many products which operate at extreme temperatures, including coffee makers, ovens, boilers, and chillers, are manufactured to include warnings printed on the exterior of the product which warn users that the product may have a dangerously hot or cold surface, or may contain a dangerously hot or cold substance. However, these warnings have become commonplace, and often do not adequately warn users of the dangers associated with the product. Furthermore, users who are familiar with particular dangers associated with a product and have read the printed warnings may become jaded and ignore the possibility of any danger indicated in the warning. Therefore, there exists a need for a product warning that cures one or more of the shortfalls of the previous approaches identified above. CN 102029248 describes a method for spraying a warning mark on the surface of an airplane heating part. US 2004/0004069 describes a heat warning safety device. EP 2669647A2 describes electrical appliances with thermochromic inks applied in high visibility areas as a thermal state indicator mechanism. JP H 0 64-65047 describes a thermochromic film. US 2016/0332730 A1 describes an aircraft gallery power and control system. US 7028634 B1 describes a work light with thermal warning. US 4554656 describes a method of producing a reversible thermochromic display.

### SUMMARY

Embodiments of the inventive concepts disclosed herein are directed to a system for temperature-related warnings. The system is defined by claim 1.

In general, the disclosure is directed to a transitory temperature-related warning. The temperature-related warning may include one or more symbols disposed on a surface of a product. The one or more symbols may be configured to alert a user as to one or more characteristics of the product. At least one of the one or more symbols may be formed with a heat-sensitive substance, wherein the one or more symbols are configured to transition from a first transitional state to at least one additional transitional state when the one or more symbols transition from a first temperature to at least one additional temperature.

It is to be understood that both the foregoing general description and the following detailed description are exemplary and explanatory only and are not necessarily restrictive of the invention as claimed. The accompanying drawings, which are incorporated in and constitute a part of the specification, illustrate embodiments of the invention and together with the general description, serve to explain the principles of the invention.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 illustrates an aircraft environment including aircraft-compliant appliances, in accordance with the present disclosure;
FIG. 2 illustrates an oven including a temperature-related warning, in accordance with the present disclosure;
FIG. 3 illustrates a coffee maker including temperature-related warnings, in accordance with the present disclosure;
FIG. 4 illustrates a chiller including a temperature-related warning, in accordance with the present disclosure;
FIGS. 5A-5C illustrate a temperature-related warning including a series of transitional states, in accordance with the present disclosure;
FIGS. 6A-6C illustrate a temperature-related warning including a series of transitional states, in accordance with the present disclosure;
FIGS. 7A-7C illustrate a temperature-related warning including a series of transitional states, in accordance with the present disclosure;
FIGS. 8A-8C illustrate a temperature-related warning including a series of transitional states, in accordance with the present disclosure;
FIGS. 9A-9C illustrate a temperature related warning including a series of transitional states, in accordance with the present disclosure; and
FIG. 10 illustrates a flowchart of a method for producing a temperature-related warning including a series of transitional states, in accordance with the present disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, directional terms such as "top," "bottom," "over," "under," "upper," "upward," "lower," "down," "downward," and similar terms, are intended to provide relative positions for purposes of description, and are not intended to designate an absolute frame of reference. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed.

Additionally, as used herein, a letter following a reference numeral is intended to reference an embodiment of the feature or element that may be similar, but not necessarily identical, to a previously described element or feature bearing the same reference numeral (e.g., 1, 1A, 1B). Such shorthand notations are used for purposes of convenience only, and should not be construed to limit the inventive concepts disclosed herein in any way unless expressly stated to the contrary.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to temperature-related warnings and messages. Additional embodiments of the inventive concepts disclosed herein are directed to the use of thermochromic substances (e.g., thermochromic paints, and the like) to convey temperature-related warnings. Further embodiments of the inventive concepts disclosed herein are directed to a method of producing temperature-related warnings and messages.

Many products are manufactured with various messages and warnings advising users of potentially harmful or dangerous properties of the products. "Caution: Hot surface," "Warning: Electrical hazard," and "Danger: Hot liquids" are just a few examples of warnings which may be printed or manufactured to inform users of various risks. While these warnings may inform users as to a danger associated with the product, these warnings may not always be accurate in that they may not always correspond to the actual state of the product. For example, an oven manufactured with a "Caution: Hot surface" label on the oven door may not have a hot surface when the oven is not in use. Accordingly, when the oven is not in use, the warning may not be accurate. Furthermore, users who use a particular product frequently, and repeatedly see a warning printed on the product, may become jaded to the message conveyed in the warning, and may tend to ignore the warning over time. Therefore, static warnings may not be effective. Accordingly, embodiments of the inventive concepts disclosed herein are directed to temperature-related warnings which may more accurately and effectively inform users of potentially dangerous conditions.

It is noted herein that embodiments of the present disclosure are directed to various symbols and/or words used to convey temperature-related warnings or messages. In this regard, terms such as "messages," "warnings," "communications," and the like, may be regarded as synonymous for the purposes of the present disclosure, unless noted otherwise herein. Furthermore, such terms may be regarded as including any assortment of words, numbers, characters, or graphics known in the art, unless noted otherwise herein. For the purposes of the present disclosure, the term "symbols" may be regarded as referring to any assortment of words, letters, numbers, graphics, and the like.

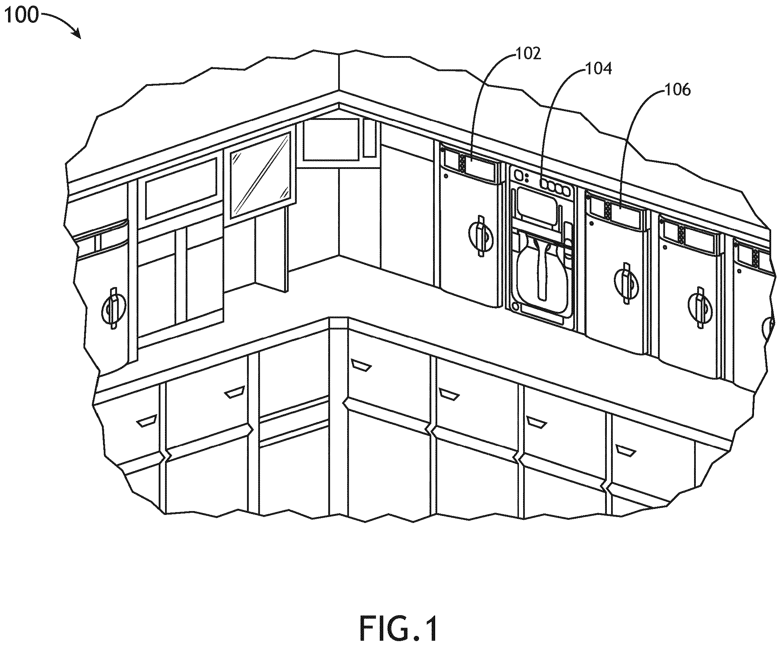

Referring generally to FIGS. 1-10, a temperature-related warning and a method for producing the temperature-related warning is described, in accordance with the present disclosure.

FIG. 1 illustrates an aircraft environment (e.g., aircraft galley 100) including aircraft-compliant galley inserts including one or more aircraft compliant appliances (e.g., oven 102, coffee maker 104, chiller 106), in accordance with an example embodiment of the present disclosure.

Aircraft galley 100 may include any type/configuration of aircraft galleys known in the art. For example, aircraft galley 100 may include two or more levels of compartments, wherein a first (lower) level of the aircraft galley 100 may include at least one galley insert that locks into a compartment and one or more storage compartments (e.g., storage lockers, cabinets, drawers, etc.). Aircraft galley 100 may include one or more aircraft-compliant galley inserts including one or more aircraft compliant appliances. For example, aircraft galley 100 may include, but is not limited to, one or more aircraft-compliant ovens 102, one or more aircraft-compliant coffee makers 104, one or more aircraft-compliant chillers 106, and the like.

The aircraft galley 100, as illustrated in FIG. 1, is provided to illustrate an environment within which the inventive concepts of the present disclosure is applied. This example embodiment is provided for explanatory purposes. However, and not within the scope of the claims, it is noted herein that the inventive concepts of the present disclosure may be carried out in environments other than that of an aircraft galley 100. In this regard, the inventive concepts of the present disclosure may be configured to operate in any type vehicle known in the art. For example, the embodiments of the present disclosure may be incorporated into the seats of any air, land, or water-based personal equipment or vehicle; any air, land, or water-based commercial equipment or vehicle; any air, land, or water-based military equipment or vehicle known in the art. By way of another example, embodiments of the present disclosure may be incorporated into the seat of an automobile. By way of another example, embodiments of the present disclosure may be incorporated into non-vehicle environments, such as residential homes, kitchens, restaurants, cafeterias, and the like. In the interest of simplicity and to most clearly define the inventive concepts of the present disclosure, embodiments may be described throughout the present disclosure in an aircraft environment. However, these references are not to be regarded as limiting. Thus, references to "aircraft," "airplanes," "avionics," and like terms should not be interpreted as a limitation on the present disclosure, unless noted otherwise herein.

It is further noted herein that, where the environment includes an aircraft environment (e.g., aircraft galley 100), embodiments of the present disclosure may be configured in accordance with avionics guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

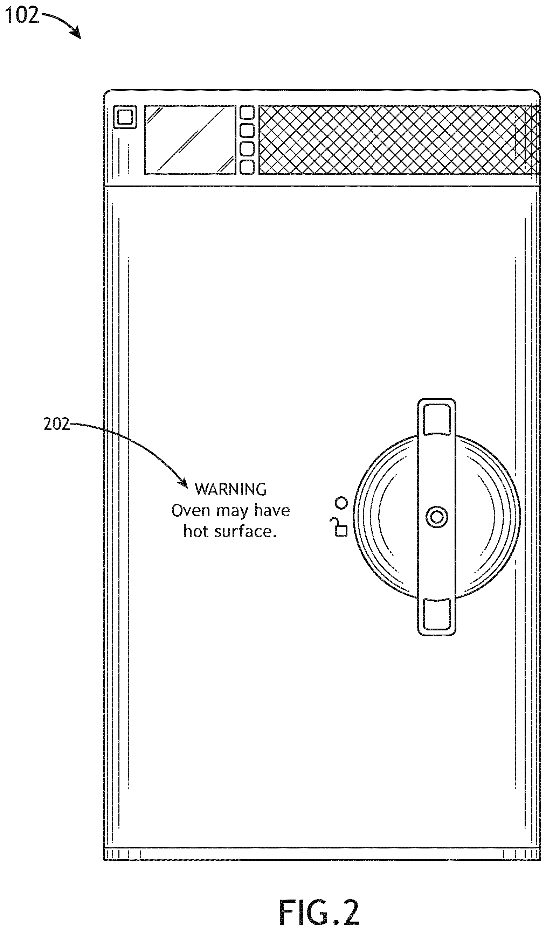

FIG. 2 illustrates an oven 102 including a temperature-related warning 202. It is noted herein that the oven 102 may be incorporated into an aircraft galley 100, as depicted in FIG. 1. In this regard, oven 102 is an aircraft-compliant appliance which complies with all applicable avionics guidelines. It is further noted herein - but not within the scope of the claims - that the oven 102 may be incorporated into other environments including, but not limited to, various other vehicle environments, residential homes, kitchens, restaurants, cafeterias, and the like.

In embodiments, warning 202 may inform users of a potentially dangerous property or condition. For example, warning 202 may inform users of a potentially dangerous temperature-related condition. As shown in FIG. 2, warning 202 may recite "WARNING: Oven may have hot surface." It is noted herein that the message in warning 202 is provided solely for illustration, and is not to be regarded as a limitation on the scope of the present disclosure.

As noted previously herein, if warning 202 included a static warning printed on the exterior of oven 102, it may not be an accurate warning at all times. For example, if the warning 202 were printed on the exterior of oven 102 with regular ink, the warning 202 would not be accurate when the oven 102 is not in use, or otherwise does not contain hot fluids. Furthermore, it is contemplated herein that users may tend to disregard static warnings which appear at all times.

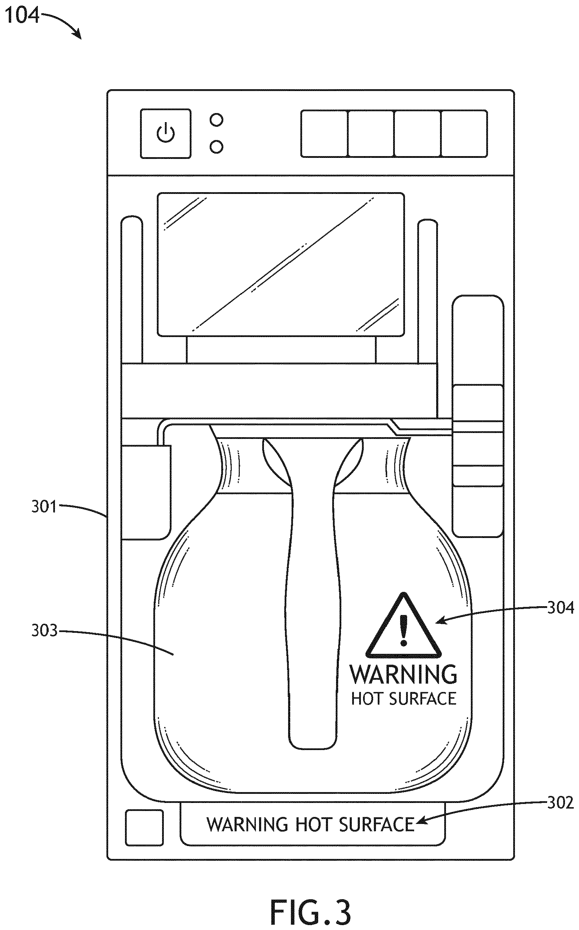

FIG. 3 illustrates a coffee maker 104 including temperature-related warnings 302, 304. It is noted herein that the coffee maker 104 may be incorporated into an aircraft galley 100, as depicted in FIG. 1. In this regard, coffee maker 104 is an aircraft-compliant appliance which complies with all applicable avionics guidelines. It is further noted herein - but not within the scope of the claims - that the coffee maker 104 may be incorporated into other environments including, but not limited to, various other vehicle environments, residential homes, kitchens, restaurants, cafeterias, and the like.

In embodiments, coffee maker 104 may include one or more warnings. For example, as depicted in FIG. 3, coffee maker 104 may include a first warning 302 manufactured and/or printed onto a hot plate 301, and a second warning 304 manufactured and/or printed onto the coffee pot 303. As discussed previously regarding the oven 102, the static warnings (e.g., a static first warning 302, a static second warning 304) manufactured and/or printed onto the coffee maker 104 may not be accurate when the coffee maker 104 is not in use, or otherwise does not contain hot liquids or a hot surface.

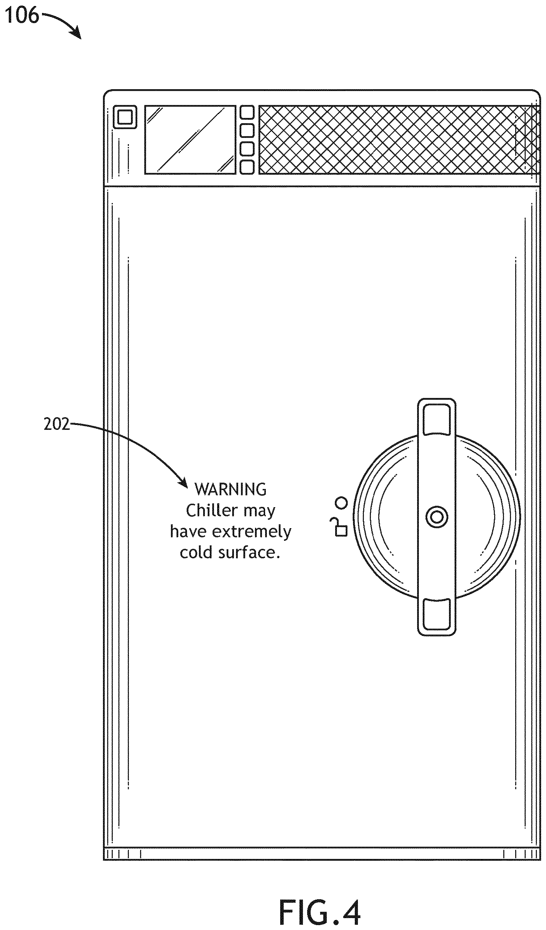

FIG. 4 illustrates a chiller 106 including a temperature-related warning 202, which does not fall within the scope of the claims. It is noted herein that the chiller 106 may be incorporated into an aircraft galley 100, as depicted in FIG. 1. In this regard, chiller 106 may include an aircraft-compliant appliance which complies with all applicable avionics guidelines. It is further noted herein that the chiller 106 may be incorporated into other environments including, but not limited to, various other vehicle environments, residential homes, kitchens, restaurants, cafeterias, and the like.

Warning 202 may inform users of a potentially dangerous property or condition. For example, warning 202 may inform users of a potentially dangerous temperature-related condition. As shown in FIG. 2, warning 202 may recite "WARNING: Chiller may have extremely cold surface." It is noted herein that the message in warning 202 is provided solely for illustration, and is not to be regarded as a limitation on the scope of the present disclosure. As noted previously herein, if warning 202 included a static warning printed on the exterior of chiller 106, it may not be an accurate warning at all times.

Accordingly, as compared to static warnings which may have a limited effectiveness, the present disclosure is directed to transitory temperature-related warnings 400, 500, 600, 700 which may be configured to indicate various temperatures and/or operational states of products/appliances. It is contemplated herein that the transitory temperature-related warnings 400, 500, 600, 700 of the present disclosure may be able to deliver more accurate and effective temperature-related warnings as compared to ordinary static warnings. For the purposes the present disclosure, the term "transitory" refers to the ability to transition between two or more transitional states.

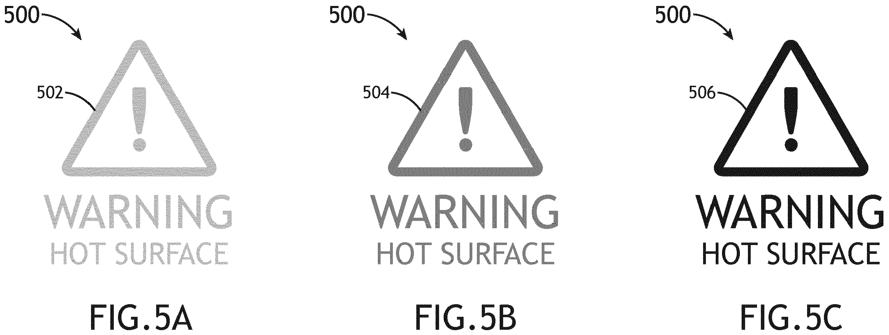

FIGS. 5A-5C illustrate a temperature-related warning 400 including a series of transitional states 502, 504, 506, in accordance with an example embodiment of the present disclosure. It is contemplated herein that temperature-related warning 500 may be used to inform users of temperature-related dangers and risks. According to the claims, temperature-related warning 500 is incorporated into an an aircraft galley appliance, such as oven 102 and/or coffee maker 104. For example, warning 202 of oven 102, and warnings 302, 304 of coffee maker 104 may include temperature-related warning 500 such that temperature-related warning 500 indicates the operational state (e.g., temperature) of the oven 102, coffee maker 104, and the like.

In embodiments, temperature-related warning 500 is configured to transition between a series of transitional warning states. As illustrated in FIGS. 5A-5C, temperature-related warning 500 is configured to transition between a first transitional state 502, a second transitional state 504, and a third transitional state 506. Although FIGS. 5A-5C illustrate temperature-related warning 500 including three transitional states 502, 504, and 506, this is not to be regarded as a limitation of the present disclosure. In this regard, temperature-related warning 500 may include any number of transitional within the scope of the claims. By way of another example, temperature-related warning 500 may include one-hundred transitional states.

Temperature-related warning 500 may be manufactured and/or printed with a thermally sensitive substance including, but not limited to, thermochromic substances, thermochromic paints, and the like. It is noted herein that thermochromic substances (e.g., thermochromic paints) may be configured to change color in response to the surrounding temperature. For example, a thermochromic paint may exhibit a first color when exposed to a first temperature, exhibit a second color when exposed to a second temperature, and the like. For instance, a thermochromic paint may appear blue when it is exposed to ambient temperature. As the surrounding temperature rises, the thermochromic paint may heat up, causing the thermochromic paint to transition between a number of transitional states. As the thermochromic paint heats up, the thermochromic paint may transition from blue, to green, to yellow, to orange, and to red as it heats up.

Accordingly, temperature-related warning 500 manufactured and/or printed with a thermochromic paint may serve as an indicator of the temperature of the surface upon which the temperature-related warning 500 is produced. As such, temperature-related warning 500 may be produced upon surfaces which will change temperatures, such as the wall of oven 102 or the hot plate 301 of coffee maker 104. It is contemplated herein that temperature-related warning 500 may transition between transitional states 502, 504, 506 to more accurately and efficiently warn users of potentially hot surfaces and/or hot contents. By more accurately and efficiently warning users of potentially dangerous conditions, embodiments of the present disclosure may prevent injuries, broken equipment, and wasted supplies, thereby preserving health and saving money.

Temperature-related warning 500 may transition between transitional states 502, 504, 506 in response to changing temperatures of the surface upon which the temperature-related warning 500 is produced. Temperature-related warning 500 may include "appearing" symbols (e.g., characters, words, graphics, and the like), wherein the temperature-related warning 500 is substantially imperceptible at a first temperature, and "appears" as the temperature changes, as shown in FIGS. 5A-5C

For example, but not within the scope of the claims, temperature-related warning 500 may be produced on the surface of an oven 102, as depicted in FIG. 2. When the oven 102 is not in use, and the surface of the oven 102 is otherwise at ambient temperature, the temperature-related warning 500 may be in the first transitional state 502, which may have a low contrast level with, and substantially blend in with, the color of the surface of the oven 102. For instance, if the surface of the oven 102 is white, the first transitional state 502 may be white or substantially white such that it has a low contrast level with the surface of the oven 102.

Continuing with the same example, as the oven 102 heats up, the temperature-related warning 500 may transition between the first transitional state 502 and the second transitional state 504. As compared to the first transitional state 502, the second transitional state 504 may exhibit a higher contrast level with the surface of the oven 102. For instance, if the surface of the oven 102 were white, the second transitional state 504 may be gray. Similarly, as the oven 102 continues to heat up, the temperature-related warning 500 may transition between the second transitional state 504 and the third transitional state 506. As compared to the first transitional state 502 and the second transitional state 504, the third transitional state 506 may exhibit a higher contrast level with the surface of the oven 102. For instance, if the surface of the oven 102 is white, the second transitional state 504 may be black.

While transitional states 502, 504, 506 have been described as particular colors (e.g., white, gray, black), this is not a limitation on the present disclosure. In this regard, transitional states 502, 504, 506 may include any colors, color schemes, shades of colors, and the like, with varying contrast levels as compared to the surface upon which the temperature-related warning 500 is produced, to the extent that they fall within the scope of the claims.

In embodiments, the various transitional states 502, 504, 506 may indicate various temperature ranges. The first transitional state 502 indicates a temperature between 0°C and 50°C (i.e. 32°F-122°F), the second transitional state 504 indicates a temperature between 50°C and 100°C (i.e. 122°F-212°F), and the third transitional state 506 indicates a temperature greater than 100°C (i.e. 212°F). In this regard, it is contemplated that transitional states 502, 504, 506 may serve to indicate the level of temperature-related danger and/or risk associated with the product upon which temperature-related warning 500 is produced. Accordingly, one or more transitional states (e.g., third transitional stat 506, and the like) may be configured to alert a user as to temperatures which pose a risk of thermal burns (e.g., thermal burn temperatures).

Not within the scope of the claims, it is noted herein that the temperature ranges which the various transitional states 502, 504, 506 are configured to indicate may not correspond to the temperatures the respective transitional states 502, 504, 506 are exposed to. For example, internal oven 102 temperatures may correspond to lower exterior surface level temperatures. For instance, continuing with the same example, temperature-related warning 500 may be produced on the exterior surface of an oven 102 and be configured to warn a user as to the temperature of the contents of the oven. In this regard, the first transitional state 502 may indicate an internal oven 102 temperature between 0°C and 50°C (i.e. 32°F-122°F), the second transitional state 504 may indicate an internal oven 102 temperature between 50°C and 100°C (i.e. 122°F-212°F), and the third transitional state 506 may indicate an internal oven 102 temperature greater than 100°C (i.e. 212°F). In this example, it is contemplated herein that when the third transitional state 506 indicates an internal oven 102 temperature greater than 100°C, the exterior surface of the oven 102 upon which the temperature-related warning 500 is produced may be only approximately 30°C. In this regard, it is contemplated herein that the temperature-related warning 500 may be configured to warn a user as to a temperature other than the temperature of the surface upon which the temperature-related warning 500 is produced.

Furthermore, and not within the scope of the claims, while temperature-related warning 500 has been described as "appearing" and/or transitioning between transitional states 502, 504, 506 as the temperature rises, this is not a limitation of the present disclosure. In this regard, temperature-related warning 500 may transition from the first transitional state 502, to the second transitional state 504, to the third transitional state 506 as the temperature decreases. For example, certain products and/or appliances may pose safety risks when the temperature of the product/appliance drops below a certain level. In this regard, temperature-related warning 500 may be at the first transitional state 502 when the product/appliance is at its hot operating temperature, and may transition to the second transitional state 504 and/or the third transitional state 506 when the temperature decreases, indicating the existence of potential safety risks.

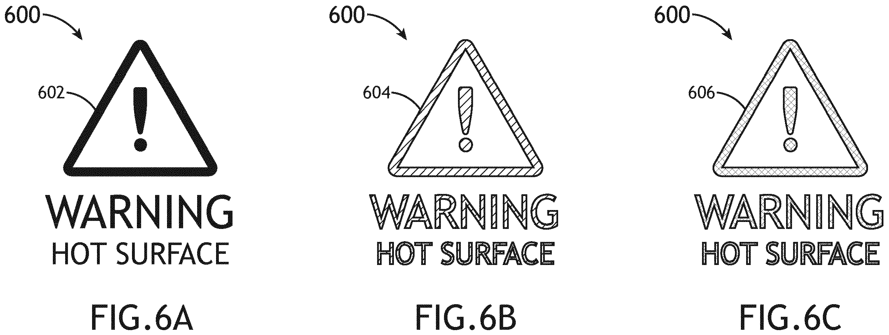

FIGS. 6A-6C illustrate a temperature-related warning 600 including a series of transitional states 602, 604, 606, in accordance with an example embodiment of the present disclosure. The description associated with temperature-related warning 500 depicted in FIGS. 5A-5C may be regarded as applying to temperature-related warning 600 depicted in FIGS. 6A-6C, unless noted otherwise herein.

In embodiments, temperature-related warning 600 may be manufactured and/or printed with thermochromic paint. In one embodiment, the text and/or graphics of temperature-related warning 600 may be visible in each of the transitional states 602, 604, 606. In additional embodiments, temperature-related warning 600 may be configured to change color in response to changing temperatures. For example, and not within the scope of the claims, the first transitional state 602 may be black, the second transitional state 604 may be maroon, and the third transitional state 606 may be scarlet. According to the claimed invention, the first transitional state 602 is blue the second transitional state 604 is yellow, and the third transitional state 606 is red.

It is contemplated herein that colors and/or contrast levels for each of the transitional states 602, 604, 606 may be selected to indicate the various levels of risk/danger associated with each of the respective transitional states 602, 604, 606. For example, in embodiments where higher temperatures pose higher levels of risk, transitional states associated with higher temperatures (e.g., third transitional state 606) may include colors and/or contrast levels which are more noticeable, and which will more effectively catch the attention of a user. Furthermore, it is contemplated herein that all or a portion of temperature-related warnings (e.g., temperature-related warnings 500, 600, 700, 800, 900) may change colors with varying temperatures. For example, it is contemplated that the entirety, one or more words, one or more graphics, one or more symbols, and the like, may change colors.

By way of another example not within the scope of the claims, the warnings 302 and 304 on coffee maker 104 may include temperature-related warnings 600. At ambient temperature, temperature related warnings 600 on coffee maker 104 may be in a first transitional state 602, wherein the words and graphic are black. As the coffee maker 104 heats up (thereby heating up the temperature-related warnings 600), the temperature-related warnings 600 may transition from the first transitional state 602 to the second transitional state 604, wherein the second transitional state 604 is maroon. As the coffee maker 104 continues to heat up, the temperature-related warnings 600 may transition from the second transitional state 604 to the third transitional state 606, wherein the third transitional state 606 is scarlet.

Multiple temperature-related warnings 500, 600 on a single product and/or appliance may be used to indicate a particular operational state of the product/appliance. For example, as shown in FIG. 3, a coffee maker 104 may include a first warning 302 manufactured and/or printed onto a hot plate 301 of the coffee maker 104, and a second warning 304 manufactured and/or printed onto the coffee pot 303. During operation, the temperature of the hot plate 301 and temperature of the coffee pot 303 may not be uniform. For instance, when the hot plate 301 first begins to heat up, the hot plate 301 may heat up faster than the coffee pot 303. In this example not within the scope of the claims, a first temperature-related warning 600a located on the hot plate 301 may be scarlet, indicating a third transitional state 606 and a high temperature, whereas a second temperature-related warning 600b located on the coffee pot 303 may be black, indicating a first transitional state 602 and a low temperature. In this regard, differences between temperature-related warnings 500, 600 may be used to indicate various operating states of respective products, appliances, and the like.

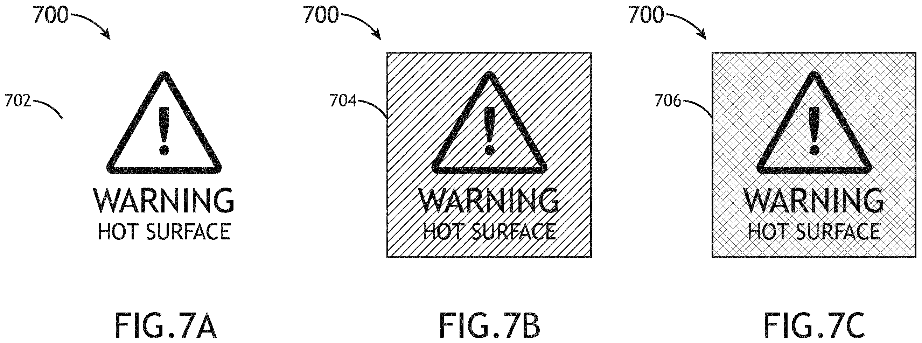

FIGS. 7A-7C illustrate a temperature-related warning 700 including a series of transitional states 702, 704, 706, not in accordance with the claims. The description associated with temperature-related warnings 500 and 600 depicted in FIGS. 5A-5C and FIGS. 6A-6C may be regarded as applying to temperature-related warning 700 depicted in FIGS. 7A-7C, unless noted otherwise herein.

The background of temperature-related warning 700 may be manufactured and/or printed with a thermochromic paint such that the background is configured to change color in response to changing temperatures. For example, the text and graphic of the transitional states 702, 704, 706 may all be printed in the same color, such as black. In this example, the background in the first transitional state 702 may be a first color, the background in the second transitional state 704 may be a second color, and the background in the third transitional state 706 may be a third color.

For instance, the temperature-related warning 700 may be printed on the surface of an oven 102 which is white. In this example, the background in the first transitional state 702 may be white or substantially white such that there is a low contrast level between the background in the first transitional state 702 and the white surface of the oven 102. Continuing with the same example, as the surface of the oven 102 heats up, the background of the temperature-related warning 700 may change colors, such that the background in the second transitional state 704 is pink, and the background in the third transitional state 706 is red. It is contemplated herein that the backgrounds of transitional states 702, 704, 706 may be arranged such that temperatures which pose higher levels of risk and/or danger are indicated by a transitional states with higher contrast levels when compared to the surfaces upon which they are disposed.

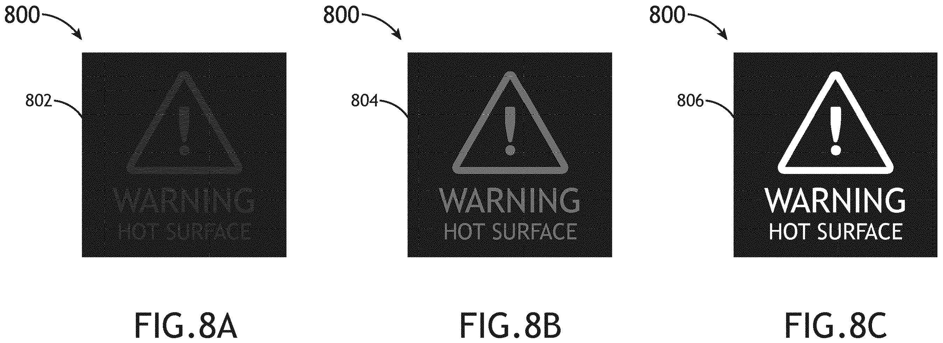

FIGS. 8A-8C illustrate a temperature-related warning 800 including a series of warning states 802, 804, 806, not in accordance with the claims. The description associated with temperature-related warnings 500, 600, and 700, as depicted in FIGS. 5A-5C, FIGS. 6A-6C, and FIGS. 7A-7C may be regarded as applying to temperature-related warning 800 depicted in FIGS. 8A-8C, unless noted otherwise herein.

Temperature-related warning 800 may include text and/or graphics (e.g., one or more symbols) which is overlaid with a mask that is manufactured and/or printed with a thermochromic substance. It is contemplated herein that the thermochromic mask overlay may appear/disappear in response to changing temperatures, thereby concealing/revealing the symbols (e.g., characters, words, graphics, and the like) printed beneath the thermochromic mask overlay.

For example, as shown in FIG. 8A-8C, temperature-related warning 800 may include a black thermochromic mask which is printed on top of white text and graphic. In the first transitional state 802, the mask overlay may be an opaque black, thereby concealing the white text/graphic beneath. As the temperature upon which temperature-related warning 800 changes, the temperature-related warning 800 may transition to the second transitional state 804 and/or the third transitional state 806. In the second transitional state 804, the mask overlay may be slightly transparent and configured to reveal the text and graphic below. In the third transitional state 806, the mask overlay may disappear (e.g., fully transparent) and may be configured to completely reveal the white text and graphic below.

The mask overlay depicted in FIGS. 8A-8C may be configured to hide symbols (e.g., characters, words, numbers, graphics, and the like) as a particular danger or risk disappears. For example, some products and/or appliances may pose risks when the products and/or appliances are cold. For instance, some products/appliances may not be able to use water when the product/appliance is in a frozen state. In this regard, a temperature-related warning 800 may be in the third transitional state 806 when the appliance is cold, thereby warning users of the potential danger. As the product/appliance heats up, the overlay mask may become more opaque, thereby transitioning from the third transitional state 806 to the second transitional state 804 and/or the first transitional state 802. When the product/appliance has warmed up to an operational temperature, at which point the potential risk has disappeared, the temperature-related warning 800 may transition to the first transitional state 802, wherein the mask overlay is fully opaque, thereby hiding the text/graphic produced below. By way of another example, temperature-related warning may be in the third transitional state 806 when the appliance is in a frozen state (e.g., inoperably frozen state), and transition to the second transitional state 804 and the first transitional state 802 when the appliance warms to a sufficiently thawed state (e.g., operably thawed state).

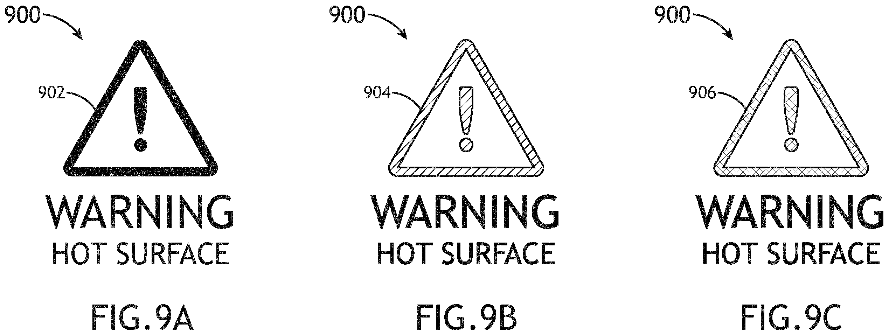

FIGS. 9A-9C illustrate a temperature-related warning 900 including a series of transitional states 902, 904, 906, not in accordance with the claims. The description associated with temperature-related warnings 500, 600, 700, and 800 as depicted in FIGS. 5A-5C, FIGS. 6A-6C, FIGS. 7A-7C, and FIGS. 8A-8C may be regarded as applying to temperature-related warning 800 depicted in FIGS. 8A-8C, unless noted otherwise herein.

Temperature-related warning 900 includes a mixture of non-transitional symbols and transitional thermochromic symbols. For example, as shown in FIGS. 9A-9C, the text of temperature-related warning 900 (e.g., "WARNING; HOT SURFACE") may be produced using a regular paint. In this regard, the text of temperature-related warning 900 may remain a single color throughout the first transitional state 902, the second transitional state 904, and the third transitional state 906. For instance, the text of temperature-related warning 900 may be black through the transitional states 902, 904, 906. Conversely, the graphic of temperature-related warning 900 may be produced with a thermochromic paint, such that the graphic is a first color in the first transitional state 902, a second color in the second transitional state 904, and a third color in the third transitional state 906.

While various examples have been shown and described with reference to FIGS. 5A-9C, it is noted herein that these examples are not to be regarded as limiting, unless noted otherwise herein. Accordingly, it is contemplated herein that various features/embodiments of the examples depicted in FIGS. 5A-9C may be combined, removed, or modified to produce varying temperature-related warnings.

Additionally, although most examples of the present disclosure describe temperature-related warnings 500, 600, 700, 800, 900 in the context of warning high temperatures, this is not to be regarded as a limitation of the present disclosure, to the extent that they fall within the scope of the claims. Not within the scope of the claims, it is contemplated herein that temperature-related warnings 500, 600, 700, 800, 900 may be configured to warn users of potentially dangerous hot temperatures and/or potentially dangerous cold temperatures. For example, as shown in FIG. 4, a temperature-related warnings 500, 600, 700, 800, 900 may be used to indicate the presence of cold temperatures of a chiller 106. Similar warnings may be used in a wide variety of galley inserts and other applications including, but not limited to, boilers, freezers, and the like. For instance, temperature-related warnings 500, 600, 700, 800, 900 may indicate dangers associated with frozen pipes, frozen plumbing, frozen appliance components, and the like. By way of another example, products which are stored at low temperatures (e.g., stored frozen) may include one or more temperature-related warnings 500, 600, 700, 800, 900 which indicate when the product has warmed to a temperature sufficient for safe operation or handling.

Not within the scope of the claims, products including aircraft-compliant appliances may include two or more temperature-related warnings 500, 600, 700, 800, 900, wherein a first temperature-related warning 500, 600, 700, 800, 900 indicates dangers associated with hot temperatures, and an additional temperature-related warning 500, 600, 700, 800, 900 indicates dangers associated with cold temperatures. For example, a chiller 106 may include compression components which produce heat while operating to maintain the low temperatures within the chiller 106. Accordingly, chiller 106 may include a first temperature-related warning 500, 600, 700, 800, 900 which warns users of potentially dangerous cold temperatures on the front of the chiller 106, and may include an additional temperature-related warning 500, 600, 700, 800, 900 which warns users of potentially dangerous hot temperatures of compression components in the rear of chiller 106.

In some embodiments, heat-producing devices (e.g., heat sources) may be used to transition temperature-related warnings 400, 500, 600, 700 on demand. For example, a heating pad may be disposed underneath temperature-related warnings 400, 500, 600, 700. The heating pad may be communicatively coupled, using any wireline or wireless techniques known in the art, to a controller. The controller may include a memory and one or more processors. The controller may be further configured to receive input commands from a user via a user interface. Accordingly, a user may be able to input a user command into a user interface, wherein the controller is configured to receive the input command and cause the heating pad to change temperatures, thereby transitioning the temperature-related warning 400, 500, 600, 700 between its respective transitional states.

It is noted herein that the one or more components of the disclosed system (e.g., heating pad, controller, user interface, and the like) may be communicatively coupled to the various other components of the system in any manner known in the art. For example, the heating pad, controller, and user interface may be communicatively coupled to each other and other components via a wireline (e.g., copper wire, fiber optic cable, and the like) or wireless connection (e.g., RF coupling, IR coupling, 3G, 4G, 4G LTE, 5G, WiFi, WiMax, Bluetooth and the like).

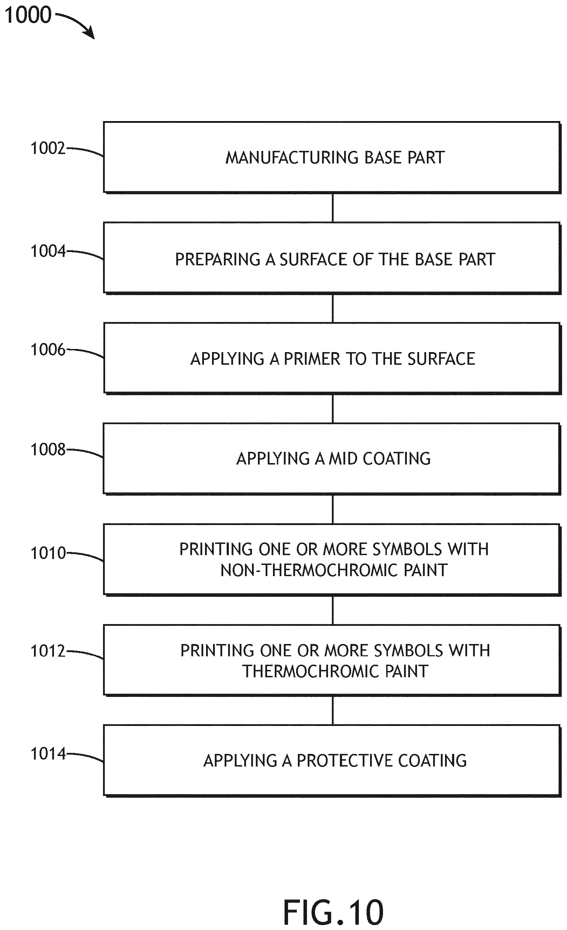

FIG. 10 illustrates a flowchart of a method 1000 for producing temperature-related warnings 400, 500, 600, 700, 800, 900 including a series of transitional sates, in accordance with an example embodiment of the present disclosure.

In a step 1002, a base part is manufactured. In embodiments, a base part may include a galley insert, an appliance, an aircraft-compliant appliance, and the like. In another embodiment, the base part may include a component of a galley insert, an appliance, an aircraft-compliant appliance, and the like. By way of example, the base part may include a hot plate of a coffee maker 104. By way of another example, the base part may include a door of oven 102. In this regard, base part may include any product and/or product component upon which a temperature-related warning 400, 500, 600, 700, 800, 900 is to be produced.

In a step 1004, a surface of the base part is prepared. By way of example, preparing the surface of the base part may include any product preparation steps known in the art including, but not limited to, cleaning, sanding, polishing, degreasing, and the like. By way of another example, when the surface to be prepared includes a metal surface, step 1004 may include deburring, anodizing, pickling, passivation, deburring, and the like.

In a step 1006, a primer is applied to the surface of the base part. In a step 1008, a mid coating is applied to the surface of the base part. For example, the mid coating may include a base paint layer. By way of another example, when the surface to be prepared includes a metal surface, step 1008 may include applying a powder coating layer. It is noted herein that applying a powder coating layer may not be required when step 1004 includes anodizing, pickling, passivation, and the like.

In a step 1010, one or more symbols (e.g., characters, words, numbers, graphics, and the like) are printed with non-thermochromic paint. For example, when printing temperature-related warning 900 illustrated in FIGS. 9A-9C, the text may be printed with the non-thermochromic paint such that the text of temperature-related warning 900 does not change between the first transitional state 902, the second transitional state 904, and the third transitional state 906.

In a step 1012, one more symbols (e.g., characters, words, numbers, graphics, and the like) are printed with thermochromic paint. For example, referring again to temperature-related warning 900 of FIGS. 9A-9C, the graphic may be printed with thermochromic paint such that the graphic changes appearances between the first transitional state 902, the second transitional state 904, and the third transitional state 906. It is noted herein that the order of step 1010 and step 1012 is provided solely for illustrative purposes, and is not to be regarded as a limitation of the present disclosure, unless noted otherwise herein.

In a step 1014, a protective coating is applied. For example, the protective coating may include one or more transparent layers configured to seal and/or protect the surface of the base part and the printed layers below. The protective coating may include any protective coatings known in the art including, but not limited to, enamel coatings, wax-based coatings, nano-coatings, ceramic coatings, and the like.

One skilled in the art will recognize that the herein described components (e.g., operations), devices, objects, and the discussion accompanying them are used as examples for the sake of conceptual clarity and that various configuration modifications are contemplated. Consequently, as used herein, the specific exemplars set forth and the accompanying discussion are intended to be representative of their more general classes. In general, use of any specific exemplar is intended to be representative of its class, and the non-inclusion of specific components (e.g., operations), devices, and objects should not be taken as limiting.

With respect to the use of substantially any plural and/or singular terms herein, those having skill in the art can translate from the plural to the singular and/or from the singular to the plural as is appropriate to the context and/or application. The various singular/plural permutations are not expressly set forth herein for sake of clarity.

It is further contemplated that each of the embodiments of the method described above may include any other step(s) of any other method(s) described herein. In addition, each of the embodiments of the method described above may be performed by any of the systems described herein.

Furthermore, it is to be understood that the invention is defined by the appended claims. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," and the like). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, and the like" is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, and the like). In those instances where a convention analogous to "at least one of A, B, or C, and the like" is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, and the like). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Furthermore, it is to be understood that the invention is defined by the appended claims.

## Claims

1. A system, comprising:
an aircraft galley appliance (102, 104, 106); and
a transitory temperature-related warning (202) disposed on a surface of the aircraft galley appliance, wherein the temperature-related warning is configured to alert a user as to one or more characteristics of the aircraft galley appliance, wherein at least one portion of the temperature-related warning is further configured to transition between a first transitional state and a second transitional state when the surface of the aircraft galley appliance transitions between a first temperature and a second temperature,
wherein the at least one portion of the temperature-related warning is further configured to transition between the second transitional state and a third transitional state when the surface of the aircraft galley appliance transitions between the second temperature and a third temperature,
and **characterised in that** the first transitional state is a blue colour and the first temperature is between 0° Celsius and 50° Celsius,
wherein the second transitional state is a yellow color and the second temperature is between 50° Celsius and 100° Celsius, and
wherein the third transitional state is a red color and the third temperature is above 100° Celsius.

2. The system of Claim 1, wherein the temperature-related warning is produced with a thermochromic paint.

3. The system of Claim 1 or 2, wherein one or more symbols of the temperature-related warning are produced with a thermochromic paint, and one or more symbols of the temperature-related warning are produced with a non-thermochromic paint.

4. The system of any of Claims 1 to 3, wherein the first transitional state exhibits a first contrast level and the second transitional state and the third transitional state exhibit an additional contrast level.

5. The system of any preceding Claim, wherein the first temperature comprises an ambient environment temperature, and the second temperature and the third temperature comprises a thermal burn temperature.

## Patentansprüche

1. System, umfassend:
ein Luftfahrzeugbordküchengerät (102, 104, 106); und
eine vorübergehende temperaturbedingte Warnung (202), die auf einer Oberfläche des Luftfahrzeugbordküchengeräts angeordnet ist, wobei die temperaturbedingte Warnung dazu konfiguriert ist, einen Benutzer bezüglich einer oder mehrerer Eigenschaften des Luftfahrzeugbordküchengeräts zu warnen, wobei mindestens ein Teil davon der temperaturbedingten Warnung ferner dazu konfiguriert ist, einen Übergang zwischen einem ersten Übergangszustand und einem zweiten Übergangszustand zu vollziehen, wenn die Oberfläche des Luftfahrzeugbordküchengeräts einen Übergang zwischen einer ersten Temperatur und einer zweiten Temperatur vollzieht,
wobei der mindestens eine Teil der temperaturbedingten Warnung ferner dazu konfiguriert ist, einen Übergang zwischen dem zweiten Übergangszustand und einem dritten Übergangszustand zu vollziehen, wenn die Oberfläche des Luftfahrzeugbordküchengeräts einen Übergang zwischen der zweiten Temperatur und einer dritten Temperatur vollzieht,
und **dadurch gekennzeichnet, dass** der erste Übergangszustand eine blaue Farbe ist und die erste Temperatur zwischen 0° Celsius und 50° Celsius liegt,
wobei der zweite Übergangszustand eine gelbe Farbe ist und die zweite Temperatur zwischen 50° Celsius und 100° Celsius liegt, und
wobei der dritte Übergangszustand eine rote Farbe ist und die dritte Temperatur über 100° Celsius liegt.

2. System nach Anspruch 1, wobei die temperaturbedingte Warnung mit einer thermochromen Farbe erzeugt wird.

3. System nach Anspruch 1 oder 2, wobei ein oder mehrere Symbole der temperaturbedingten Warnung mit einer thermochromen Farbe erzeugt werden und ein oder mehrere Symbole der temperaturbedingten Warnung mit einer nicht thermochromen Farbe erzeugt werden.

4. System nach einem der Ansprüche 1 bis 3, wobei der erste Übergangszustand eine erste Kontraststärke aufweist und der zweite Übergangszustand und der dritte Übergangszustand eine zusätzliche Kontraststärke aufweisen.

5. System nach einem der vorhergehenden Ansprüche, wobei die erste Temperatur eine Umgebungstemperatur umfasst und die zweite Temperatur und die dritte Temperatur eine thermische Verbrennungstemperatur umfassen.

## Revendications

1. Système, comprenant :
un appareil de cuisine d'aéronef (102, 104, 106) ; et
un avertissement lié à la température transitoire (202) disposé sur une surface de l'appareil de cuisine d'aéronef, dans lequel l'avertissement lié à la température est configuré pour alerter un utilisateur concernant une ou plusieurs caractéristiques de l'appareil de cuisine d'aéronef, dans lequel au moins une partie de l'avertissement lié à la température est en outre configuré pour passer d'un premier état de transition à un deuxième état de transition lorsque la surface de l'appareil de cuisine d'aéronef passe d'une première température à une deuxième température,
dans lequel l'au moins une partie de l'avertissement lié à la température est en outre configurée pour passer du deuxième état de transition à un troisième état de transition lorsque la surface de l'appareil de cuisine d'aéronef passe de la deuxième température à une troisième température,
et **caractérisé en ce que** le premier état de transition est de couleur bleue et la première température est comprise entre 0° Celsius et 50° Celsius,
dans lequel le deuxième état de transition est de couleur jaune et la deuxième température est comprise entre 50° Celsius et 100° Celsius, et
dans lequel le troisième état de transition est de couleur rouge et la troisième température est supérieure à 100° Celsius.

2. Système selon la revendication 1, dans lequel l'avertissement lié à la température est réalisée avec une peinture thermochromique.

3. Système selon la revendication 1 ou 2, dans lequel un ou plusieurs symboles de l'avertissement lié à la température sont produits avec une peinture thermochromique, et un ou plusieurs symboles de l'avertissement lié à la température sont produits avec une peinture non thermochromique.

4. Système selon l'une quelconque des revendications 1 à 3, dans lequel le premier état de transition présente un premier niveau de contraste et le deuxième état de transition et le troisième état de transition présentent un niveau de contraste supplémentaire.

5. Système selon une quelconque revendication précédente, dans lequel la première température comprend une température d'environnement ambiant, et la deuxième température et la troisième température comprennent une température de combustion thermique.
